# EUROPÄISCHE PATENTSCHRIFT

(11) **EP 2 558 245 B1**
(45) Veröffentlichungstag und Bekanntmachung des Hinweises auf die Patenterteilung: **05.03.2014**
(21) Anmeldenummer: 11714516.9
(22) Anmeldetag: 06.04.2011
(51) Int. Cl.: B23K 35/22, B23K 35/30, F01D 5/00

(54) **GERMANIUMHALTIGES LOT, EIN BAUTEIL MIT EINEM LOT UND EIN VERFAHREN ZUM LÖTEN**
Solder containing germanium, component with a solder and a soldering method
Lot contenant du germanium, un composant doté d'un lot et un procédé de soudage

(30) Priorität: 12.04.2010 EP 10003854
(43) Veröffentlichungstag der Anmeldung: 20.02.2013
(73) Patentinhaber: Siemens Aktiengesellschaft, 80333 München (DE)
(72) Erfinder: PIEGERT, Sebastian, 10777 Berlin (DE); RANDELZHOFER, Peter, 91052 Erlangen (DE); OTT, Michael, 45470 Mülheim an der Ruhr (DE); SINGER, Robert, 91054 Erlangen (DE)
(86) Internationale Anmeldenummer: PCT/EP2011/055362
(87) Internationale Veröffentlichungsnummer: WO 2011/128239

(56) Entgegenhaltungen:
- EP-A1- 1 970 156

## Beschreibung

Die Erfindung betrifft ein germaniumhaltiges Lot, ein Bauteil mit einem Lot und ein Verfahren zum Löten.

Stand der Technik sind bor- und/oder siliziumhaltige Lote, die beim Löten in Lötnähten aber Grundwerkstoffhartphasen wie Boride und Silizide ausscheiden. Die Folge davon ist eine negative Beeinflussung der mechanischen Eigenschaften durch die Hartphasen.
Außerdem sind als Schmelzpunktsenker auch die Elemente Skandium und/oder Zirkonium bekannt, deren größter Nachteil die hohe Sauerstoffaffinität ist, welches nach hohen Qualitäten der Lötatmosphäre verlangt.

Es ist daher Aufgabe der Erfindung, ein verbessertes Lot für Hochtemperaturanwendungen zu entwickeln.

Die Aufgabe wird durch ein nickelbasiertes Lot gemäß Anspruch 1, durch ein Bauteil gemäß Anspruch 5 und ein Verfahren gemäß Anspruch 14, gelöst.

In den Unteransprüchen sind weitere vorteilhafte Maßnahmen aufgelistet, die beliebig miteinander kombiniert werden können, um weitere Vorteile zu erzielen.

Durch die Verwendung von Germanium kommt es zu deutlich reduzierten Anteilen von niedrigschmelzenden Eutektika.

Der besondere Vorteil von Germanium ist, dass es einen γ'-Bildner darstellt und keine Sprödphasen bildet.
Die isotherme Lötung gestaltet sich mit Germanium schneller, da sich Germanium in der Matrix löst und somit schneller diffundiert.
Germanium ersetzt teilweise A1 + Ti, die sauerstoffaffin sind, sodass durch Germanium die Oxidbildung reduziert wird.

Insbesondere können titanhaltige Superlegierungen mit dieser Lotlegierung gelötet werden, insbesondere PWA1483.

Mit dem Lot können nicht nur nickelbasierte Superlegierungen, sondern auch kobaltbasierte Basislegierungen gelötet werden.

Es zeigen:
- Figur 1: eine Gasturbine,
- Figur 2: eine Turbinenschaufel,
- Figur 3: eine Brennkammer,
- Figur 4: eine Liste von Superlegierungen.

Die Beschreibung und die Figuren stellen nur Ausführungsbeispiele der Erfindung dar.

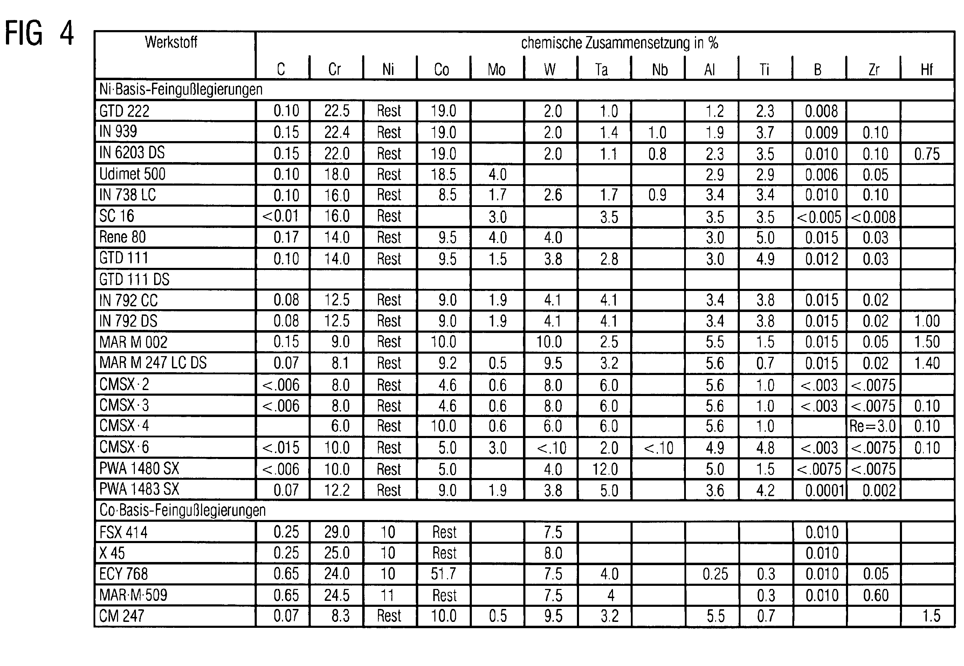

Das Bauteil, das mit dem germaniumhaltigen Lot verlötet wird, weist ein nickel- oder kobaltbasiertes Superlegierungsmaterial auf, wie es in Figur 4 aufgelistet ist. Das Substrat ist vorzugsweise gerichtet erstarrt, weist also kolumnare Körner auf oder ist einkristallin ausgebildet.
Mit dem Lot können Löttemperaturen zwischen 1080°C und 1240°C eingestellt werden. Das Verfahren kann isotherm oder mit einem Temperaturgradienten durchgeführt werden. Je nach Parametern der Wärmebehandlung kann das Lot gerichtet oder ungerichtet erstarrt werden.

Das nickelbasierte Lot besteht in nicht abschließender Auflistung folgende Elemente (in Gew.%) aus:
10% bis 25% Germanium (Ge),
insbesondere 15% bis 20% Germanium (Ge),
10,5% bis 12,6% Chrom (Cr),
insbesondere 11,2% bis 11,9% Chrom (Cr),
7,1% bis 8,6% Kobalt (Co),
insbesondere 7,6% bis 8,1w% Kobalt (Co),
3% bis 3,6% Molybdän (Mo),
insbesondere 3,2% bis 3,4% Molybdän (Mo),
3% bis 3,6% Wolfram (W),
insbesondere 3,2% bis 3,4% Wolfram (W),
2,2% bis 2,7% Aluminium (Al),
insbesondere 2,4% bis 2,6w% Aluminium (Al),
sowie 3,6% bis 4,5% Titan (Ti),
insbesondere 4,0% bis 4,5% Titan (Ti),
Nickel (Ni).

Vorzugsweise lässt sich Rene 80 oder PWA1483 in diesem Lot reparieren.
Je nach Substrat und Schädigungsstelle und späterer Einsatztemperatur kann das Lot gerichtet oder ungerichtet erstarrt werden.
Dies geschieht vorzugsweise durch ein isothermes Verfahren.

Die Legierung stellt vorzugsweise keine Mischung aus verschiedenen Pulvern dar, sondern ist eine Legierung mit den aufgelisteten Elementen.

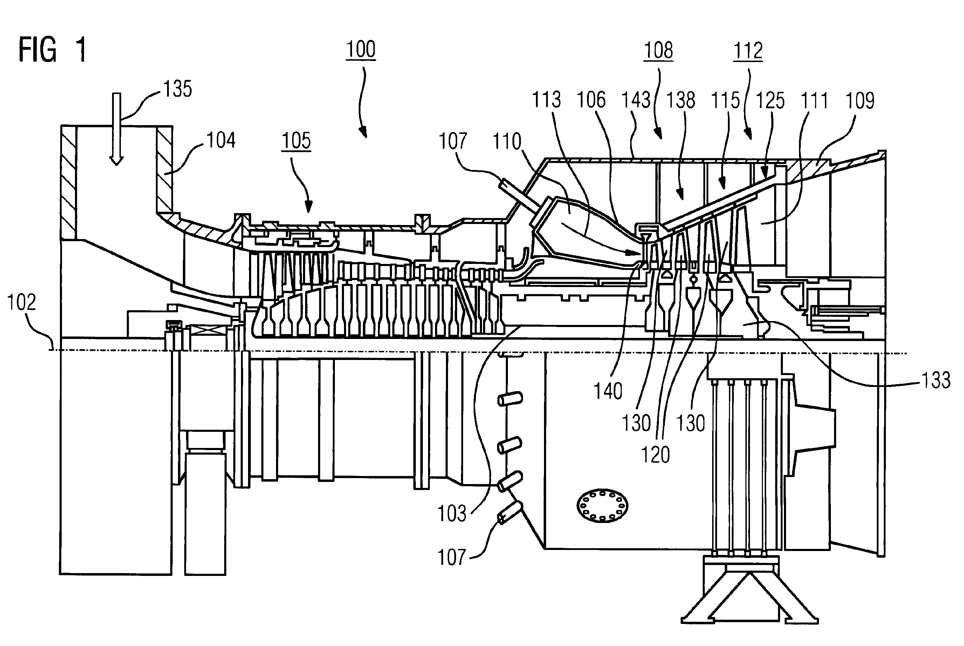

Die Figur 1 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

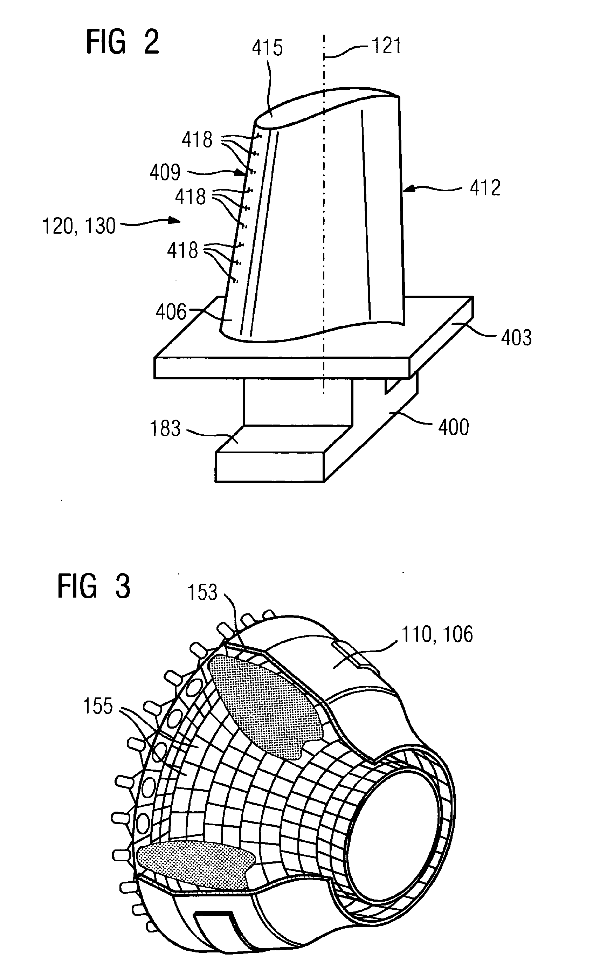

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAIX-Schicht.

Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAIX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 3 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAIX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAIX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAIX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Nickelbasiertes Lot,
bestehend aus (in Gew.-%) :
10% bis 25% Germanium (Ge),
insbesondere 15% bis 20% Germanium (Ge),
10,5% bis 12,6% Chrom (Cr),
insbesondere 11,2% bis 11,9% Chrom (Cr),
7,1% bis 8,6% Kobalt (Co),
insbesondere 7,6% bis 8,1w% Kobalt (Co),
3% bis 3, 6% Molybdän (Mo),
insbesondere 3,2% bis 3,4% Molybdän (Mo),
3% bis 3,6% Wolfram (W),
insbesondere 3,2% bis 3,4% Wolfram (W),
2,2% bis 2,7% Aluminium (A1),
insbesondere 2,4% bis 2,6w% Aluminium (Al),
sowie 3,6% bis 4,5% Titan (Ti),
insbesondere 4,0% bis 4,5% Titan (Ti).
Rest Ni.

2. Lot nach Anspruch 1,
das aus den Elementen Nickel (Ni), Germanium (Ge), Chrom (Cr), Kobalt (Co), Molybdän (Mo), Wolfram (W), Aluminium (Al) und Titan (Ti) besteht.

3. Lot nach Anspruch 1 oder 2,
das eine Legierung mit allen angegebenen Legierungselementen darstellt.

4. Lot nach Anspruch 1, 2 oder 3,
das kein Bor (B) und/oder kein Silizium (Si) und/oder kein Kupfer (Cu) und/oder kein Zirkon (Zr) und/oder kein Scandium (Sc) aufweist.

5. Bauteil mit einem Lot nach Anspruch 1, 2, 3 oder 4.

6. Bauteil nach Anspruch 5,
das eine nickelbasierte Superlegierung als Substrat aufweist.

7. Bauteil nach Anspruch 5,
das eine kobaltbasierte Superlegierung als Substrat aufweist.

8. Bauteil nach Anspruch 6,
das Rene 80 oder IN 738 als Substrat aufweist.

9. Bauteil nach Anspruch 6,
das PWA 1483 als Substratmaterial aufweist.

10. Bauteil nach Anspruch 5, 6 oder 9,
das im Substrat eine gerichtet erstarrte Struktur aufweist.

11. Bauteil nach Anspruch 5, 6, 7, 8 oder 9,
das im Substrat keine gerichtet erstarrte Struktur aufweist.

12. Bauteil nach Anspruch 5, 6, 7, 8, 9, 10 oder 11,
bei dem das Lot keine gerichtet erstarrte Struktur aufweist.

13. Bauteil nach Anspruch 6, 7, 8, 9, 10 oder 11,
bei dem das Lot eine gerichtet erstarrte Struktur aufweist.

14. Verfahren zum Löten eines Bauteils (120, 130),
insbesondere zur Herstellung eines Bauteils (120, 130) nach einem oder mehreren der Ansprüche 5 bis 13,
bei dem ein Lot nach Anspruch 1, 2, 3 oder 4 verwendet wird.

15. Verfahren nach Anspruch 14,
das isotherm durchgeführt wird,
insbesondere bei einkristallinen Bauteilen (120, 130).

## Claims

1. Nickel-based solder
consisting of (in % by weight):
10% to 25% germanium (Ge),
in particular 15% to 20% germanium (Ge),
10.5% to 12.6% chromium (Cr),
in particular 11.2% to 11.9% chromium (Cr),
7.1% to 8.6% cobalt (Co),
in particular 7.6% to 8.1% cobalt (Co),
3% to 3.6% molybdenum (Mo),
in particular 3.2% to 3.4% molybdenum (Mo),
3% to 3.6% tungsten (W),
in particular 3.2% to 3.4% tungsten (W),
2.2% to 2.7% aluminum (Al),
in particular 2.4% to 2.6% aluminum (Al),
and 3.6% to 4.5% titanium (Ti),
in particular 4.0% to 4.5% titanium (Ti), remainder Ni.

2. Solder according to Claim 1,
consisting of the elements nickel (Ni), germanium (Ge), chromium (Cr), cobalt (Co), molybdenum (Mo), tungsten (W), aluminum (Al) and titanium (Ti).

3. Solder according to Claim 1 or 2,
constituting an alloy having all of the alloy elements indicated.

4. Solder according to Claim 1, 2 or 3,
comprising no boron (B) and/or no silicon (Si) and/or no copper (Cu) and/or no zirconium (Zr) and/or no scandium (Sc) .

5. Component comprising a solder according to Claim 1, 2, 3 or 4.

6. Component according to Claim 5,
comprising a nickel-based superalloy as the substrate.

7. Component according to Claim 5,
comprising a cobalt-based superalloy as the substrate.

8. Component according to Claim 6,
comprising Rene 80 or IN 738 as the substrate.

9. Component according to Claim 6,
comprising PWA 1483 as the substrate material.

10. Component according to Claim 5, 6 or 9,
having a directionally solidified structure in the substrate.

11. Component according to Claim 5, 6, 7, 8 or 9,
not having a directionally solidified structure in the substrate.

12. Component according to Claim 5, 6, 7, 8, 9, 10 or 11,
wherein the solder does not have a directionally solidified structure.

13. Component according to Claim 6, 7, 8, 9, 10 or 11,
wherein the solder has a directionally solidified structure.

14. Process for soldering a component (120, 130),
in particular for producing a component (120, 130) according to one or more of Claims 5 to 13,
in which a solder according to Claim 1, 2, 3 or 4 is used.

15. Process according to Claim 14,
which is carried out isothermally,
in particular in the case of single-crystal components (120, 130).

## Revendications

1. Apport de brasure à base de nickel,
constitué ( en pourcentage en poids ) :
de 10% à 25% de germanium ( Ge ),
notamment de 15% à 20% de germanium ( Ge ),
de 10,5% à 12,6% de chrome ( Cr ),
notamment de 11,2% à 11,9% de chrome ( Cr ),
de 7,1% à 8,6% de cobalt ( Co ),
notamment de 7,6% à 8,1% de cobalt ( Co ),
de 3% à 3,6% de molybdène ( Mo ),
notamment de 3,2% à 3,4% de molybdène ( Mo ),
de 3% à 3,6% de tungstène ( W ),
notamment de 3,2% à 3,4% de tungstène ( W ),
de 2,2% à 2,7% d'aluminium ( Al ),
notamment de 2,4% à 2,6% d'aluminium ( Al ),
ainsi que de 3,6% à 4,5% de titane ( Ti ),
notamment de 4,0% à 4,5% de titane ( Ti ).
Le reste étant du Ni.

2. Apport de brasure suivant la revendication 1,
qui est constitué des éléments nickel ( Ni ), germanium ( Ge ), chrome ( Cr ), cobalt ( Co ), molybdène ( Mo ), tungstène ( W ), aluminium ( Al ) et titane ( Ti ).

3. Apport de brasure suivant la revendication 1 ou 2,
qui représente un alliage ayant tous les éléments d'alliage indiqués.

4. Apport de brasure suivant la revendication 1, 2 ou 3,
qui n'a pas de bore ( B ) et/ou pas de silicium ( Si ) et/ou pas de cuivre ( Cu ) et/ou pas de zirconium ( Or et/ou pas de scandium ( Sc ).

5. Composant ayant une brasure suivant la revendication 1, 2, 3 ou 4.

6. Composant suivant la revendication 5,
qui a, comme substrat, un super alliage à base de nickel.

7. Composant suivant la revendication 5,
qui a, comme substrat, un super alliage à base de cobalt.

8. Composant suivant la revendication 6,
qui a, comme substrat, rene 80 ou IN 738.

9. Composant suivant la revendication 6,
qui a, comme matériau de substrat, PWA 1483.

10. Composant suivant la revendication 5, 6 ou 9,
qui a une structure à solidification dirigée dans le substrat.

11. Composant suivant la revendication 5, 6, 7, 8 ou 9,
qui n'a pas de structure à solidification dirigée dans le substrat.

12. Composant suivant la revendication 5, 6, 7, 8, 9, 10 ou 11,
dans lequel la brasure n'a pas de structure à solidification dirigée.

13. Composant suivant la revendication 6, 7, 8, 9, 10 ou 11,
dans lequel la brasure a une structure à solidification dirigée.

14. Procédé de brasage d'un composant ( 120, 130 ), notamment pour la fabrication d'un composant ( 120, 130 ) suivant l'une ou plusieurs des revendications 5 à 13,
dans lequel on utilise une brasure suivant la revendication 1, 2, 3 ou 4.

15. Procédé suivant la revendication 14,
qui est effectué de manière isotherme,
notamment pour des composants ( 120, 130 ) monocristallins.
